# EUROPEAN PATENT APPLICATION

(11) **EP 3 490 095 A1**
(43) Date of publication of application: **29.05.2019**
(21) Application number: 17830340.0
(22) Date of filing: 28.06.2017
(51) Int. Cl.: H02J 7/00, H02J 7/35, H02J 9/06

(54) **INTEGRATED OPTICAL CHARGING, STORAGE AND REPLACEMENT STATION AND POWER DISTRIBUTION METHOD THEREFOR**

(30) Priority: 21.07.2016 CN 201610580634
(71) Applicant: Nio Nextev Limited, Central, Hong Kong (CN)
(72) Inventor: CHEN, Jiong, Hong Kong (CN); ZHANG, Jianxing, Hong Kong (CN); SHEN, Fei, Hong Kong (CN)
(74) Representative: Vossius & Partner Patentanwälte Rechtsanwälte mbB
(86) International application number: PCT/CN2017/090522
(87) International publication number: WO 2018/014706

(57) **Abstract**

The invention relates to the technical field of battery charging and swapping for electric vehicles, and in particular to an integrated photovoltaic charging, storage and swapping station and a power distribution method therefor. The invention is intended to solve the problem of a unitary energy storage and flow process in the existing battery charging and swapping station. To this end, the integrated photovoltaic charging, storage and swapping station of the invention comprises a photovoltaic system, a power distribution system, a charging and discharging system, an energy storage battery and a control system. By means of the rational utilization and distribution of first electric energy produced by the photovoltaic system, second electric energy received by the power distribution system from a power grid, third electric energy of the energy storage battery itself, and a power supplementation requirement of an electric vehicle, the flexible switching of the electric energy among the photovoltaic system, the power grid, the energy storage battery and the electric vehicle is achieved. Furthermore, in order to respond to an economic regulation measure of a peak-valley price difference for a power grid, the invention achieves peak-load shifting by means of a photovoltaic system and an energy storage battery.

## Description

### Technical Field

The invention relates to the technical field of battery charging and swapping for electric vehicles, and in particular to an integrated photovoltaic charging, storage and swapping station and a power distribution method therefor.

### Background Art

With the popularization of electric vehicles, how to provide electric energy replenishment for an electric vehicle with insufficient electric power in time and efficiently has become a major concern for both manufacturers and vehicle owners. The mainstream solution in the current market is an electric vehicle battery charging and swapping station that uses a charging mode and a battery swap mode, and an AC slow charging pile or a DC rapid charging pile is provided in a parking space, or an exhausted battery pack is directly replaced with a fully charged battery pack. In addition, there are also battery charging and swapping stations using photovoltaic power generation, and technologies such as grid connection and battery energy storage have also been widely applied in battery charging and swapping stations. However, all of these technologies only get through a part of an energy storage and flow process, for example, the photovoltaic power generation realizes the conversion of solar energy to electric energy, and an AC charging pile realizes the transmission of electric energy from the power grid to electric vehicles.

Therefore, to solve the above problem, the invention combines an energy storage battery, photovoltaic input, peak-valley characteristics of a power grid, and a battery charging and swapping demand of an electric vehicle user, develops the potential of devices, gets through electric energy flow, and realizes optimal allocation of electric energy in time and space.

### Summary of the Invention

In order to solve the above problem in the prior art, that is, to solve the problem of a unitary energy storage and flow process in the existing battery charging and swapping station, the invention provides an integrated photovoltaic charging, storage and swapping station. The integrated photovoltaic charging, storage and swapping station comprises a photovoltaic system, a power distribution system, a charging and discharging system, an energy storage battery and a control system, wherein the photovoltaic system is used for converting solar energy into first electric energy, and transmitting the first electric energy to the energy storage battery or a rapid charging plug via the charging and discharging system or transmitting the first electric energy to a power grid or a slow charging plug via the power distribution system; the power distribution system is used for receiving second electric energy from the power grid and transmitting the second electric energy to the slow charging plug or the second electric energy is transmitted to the energy storage battery via the charging and discharging system; the charging and discharging system is used for receiving the first electric energy transmitted from the photovoltaic system and the second electric energy transmitted from the power distribution system, and transmitting the first electric energy and the second electric energy to the energy storage battery and the rapid charging plug; the energy storage battery is used for receiving and storing the first electric energy and the second electric energy transmitted from the charging and discharging system; and the control system is used for controlling the operation states of the photovoltaic system, the power distribution system, the charging and discharging system and the energy storage battery.

In a preferred embodiment of the integrated photovoltaic charging, storage and swapping station, the photovoltaic system comprises a photovoltaic panel assembly for converting solar energy into the first electric energy and an inverter by which the first electric energy is converted into an alternating current and then flows to the power distribution system, the power distribution system receiving the first electric energy and transmitting same to the power grid.

In a preferred embodiment of the integrated photovoltaic charging, storage and swapping station, the charging and discharging system comprises a DC-DC module and a two-way charging and discharging machine, and the first electric energy transmitted from the photovoltaic system is used to charge the energy storage battery through the DC-DC module or to directly charge an electric vehicle by means of the rapid charging plug; and the two-way charging and discharging machine is used for transmitting the second electric energy transmitted from the power distribution system to the energy storage battery or transmitting third electric energy from the energy storage battery to the power distribution system.

In a preferred embodiment of the integrated photovoltaic charging, storage and swapping station, the integrated photovoltaic charging, storage and swapping station further comprises a battery swap system for replacing a battery of the electric vehicle.

In a preferred embodiment of the integrated photovoltaic charging, storage and swapping station, the battery swap system comprises a battery rack, a battery swap platform and a battery swap robot, wherein the battery rack is used for placing the energy storage battery; the battery swap platform is used for parking the electric vehicle; and the battery swap robot is used for replacing the battery of the electric vehicle and is able to transport a battery between the battery swap platform and the battery rack.

In a preferred embodiment of the integrated photovoltaic charging, storage and swapping station, the control system comprises a central control system, a monitoring system, a communication network interface and a human-machine interaction interface, wherein the central control system is used for performing centralized control over the integrated photovoltaic charging, storage and swapping station; the monitoring system is used for monitoring the operation states of the photovoltaic system, the power distribution system, the charging and discharging system, the energy storage battery and the battery swap system; the communication network interface is used for connecting communications among the photovoltaic system, the power distribution system, the charging and discharging system, the energy storage battery and the battery swap system; and the human-machine interaction interface is used for information interaction between a user and the control system.

In a preferred embodiment of the integrated photovoltaic charging, storage and swapping station, the charging and discharging system further comprises a charging and discharging rack and an electrical control system located within the charging and discharging rack.

In a preferred embodiment of the integrated photovoltaic charging, storage and swapping station, the integrated photovoltaic charging, storage and swapping station further comprises a charging container, which is used for housing the power distribution system, the charging and discharging system, the energy storage battery, the battery rack for placing the energy storage battery, and the control system.

The invention further provides a power distribution method for the integrated photovoltaic charging, storage and swapping station. In the method, when the photovoltaic system is ready to work: if the electricity price of the power grid is low, the first electric energy transmitted from the photovoltaic system is used to charge the energy storage battery through the DC-DC module or to directly charge the electric vehicle by means of the rapid charging plug; and if the electricity price of the power grid is high, the first electric energy transmitted from the photovoltaic system is transmitted to the power grid or the slow charging plug via the power distribution system.

In the power distribution method, when the photovoltaic system is not suitable for working: if the electricity price of the power grid is low and/or the demand for battery swapping is great, the power distribution system transmits the second electric energy transmitted from the power grid to the slow charging plug or the second electric energy is transmitted to the energy storage battery via the charging and discharging system; and if the electricity price of the power grid is high and/or the demand for battery swapping is small, the power distribution system receives the third electric energy transmitted, via the two-way charging and discharging machine, from the energy storage battery and then transmits the third electric energy to the power grid.

The integrated photovoltaic charging, storage and swapping station of the invention rationally integrates a photovoltaic power generation system, a power distribution system, a charging and discharging system, an energy storage battery and a battery swap system together, which are uniformly coordinated by a control system, and by means of rational configuration and scheduling of various systems, the rational allocation and the flexible switching of the electric energy between the photovoltaic system, the power grid, the energy storage battery and the electric vehicle are achieved. Furthermore, in order to respond to an economic regulation measure of a peak-valley price difference for a power grid, an electricity consuming strategy of a photovoltaic system and an energy storage battery can be used to realize peak-load shifting. The integrated photovoltaic charging, storage and swapping station not only has the functions of battery swapping, rapid charging and slow charging, but can also obtain electric energy from the photovoltaic system and the power grid, and can also feed back the electric energy from the energy storage battery and the photovoltaic system to the power grid.

### Brief Description of the Drawings

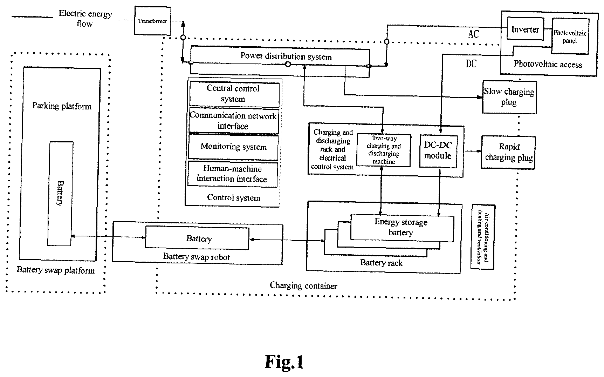

Fig. 1 is a schematic structural diagram of an integrated photovoltaic charging, storage and swapping station of the invention.

### Detailed Description of Embodiments

The preferred embodiments of the invention are described below with reference to the accompanying drawings. It should be understood by those skilled in the art that these embodiments are only used for explaining the technical principle of the invention, and are not intended to limit the scope of protection of the invention.

At present, among battery charging and swapping stations that provide electric energy replenishment for electric vehicles, there are a battery charging and swapping station that uses a photovoltaic system to generate electricity, an AC charging pile and a DC charging pile that use a power grid to directly supply power, and also an energy storage battery to feed back energy to the power grid during electricity consumption peaks. The objective of the invention is to solve the problem of how to optimize the allocation of energy resources in time and space, and to achieve the rational allocation and scheduling of the electric energy among a photovoltaic system, a power grid system, an energy storage system and an electric vehicle. Specifically, as shown in Fig. 1, the integrated photovoltaic charging, storage and swapping station provided by the invention comprises a photovoltaic system, a power distribution system, a charging and discharging system, an energy storage battery and a control system. The photovoltaic system is used for converting solar energy into first electric energy, and transmitting the first electric energy to the energy storage battery or a rapid charging plug via the charging and discharging system or transmitting the first electric energy to a power grid or a slow charging plug via the power distribution system; the power distribution system is used for receiving second electric energy from the power grid and transmitting the second electric energy to the slow charging plug or the second electric energy is transmitted to the energy storage battery via the charging and discharging system; the charging and discharging system is used for receiving the first electric energy transmitted from the photovoltaic system and the second electric energy transmitted from the power distribution system, and transmitting the first electric energy and the second electric energy to the energy storage battery and the rapid charging plug; the energy storage battery is used for receiving and storing the first electric energy and the second electric energy transmitted from the charging and discharging system; and the control system is used for controlling the operation states of the photovoltaic system, the power distribution system, the charging and discharging system and the energy storage battery. The particular embodiments of the invention will be described in detail below in conjunction with the accompanying drawings.

With continued reference to Fig. 1, the photovoltaic system comprises a photovoltaic panel assembly and an inverter; a power distribution system is connected to a power grid via a transformer (see "electric energy flow" in the upper left corner of Fig. 1); and a charging and discharging system comprises a DC-DC module, a two-way charging and discharging machine, a charging and discharging rack for placing the two-way charging and discharging machine, and an electrical control system located within the charging and discharging rack. When the photovoltaic system works, firstly, solar energy is converted into first electric energy through the photovoltaic panel assembly. In one aspect, the first electric energy is converted into an alternating current via the inverter and then flows to the power distribution system, and the power distribution system receives the first electric energy and then transmits same to the power grid; and in another aspect, after solar energy is converted into the first electric energy through the photovoltaic panel assembly, the energy storage battery is charged directly through the DC-DC module, or an electric vehicle is directly charged by means of a rapid charging plug. When the power distribution system works, firstly, the power distribution system receives second electric energy from the power grid. In one aspect, the second electric energy can be used to directly charge the electric vehicle by means of a slow charging plug; and in another aspect, the power distribution system transmits, via the two-way charging and discharging machine, the second electric energy received from the power grid to the energy storage battery. It should be noted that the energy storage battery is used for storing the first electric energy and the second electric energy, and under suitable conditions, such as during electricity consumption peaks, the energy storage battery can also transmit, via the two-way charging and discharging machine, third electric energy stored therein to the power distribution system.

With continued reference to Fig. 1, the integrated photovoltaic charging, storage and swapping station further comprises a battery swap system for replacing a battery of the electric vehicle. Specifically, the battery swap system comprises a battery rack, a battery swap platform and a battery swap robot. The battery rack is used for placing the energy storage battery (the energy storage battery shown in Fig. 1 is placed on the battery rack); the battery swap platform is used for parking the electric vehicle; and the battery swap robot is used for replacing the battery of the electric vehicle and is able to transport a battery between the battery swap platform and the battery rack. When an electric vehicle needs to swap a battery, firstly, the electric vehicle is parked on the battery swap platform, the battery swap robot removes the low-power battery of the electric vehicle and then transports it to the battery rack, and then fetches a fully charged battery from the battery rack and transport it to the battery swap platform to swap the battery of the electric vehicle.

With continued reference to Fig. 1, the integrated photovoltaic charging, storage and swapping station further comprises a control system which is used for controlling the operation states of the photovoltaic system, the power distribution system, the charging and discharging system and the energy storage battery. Specifically, the control system comprises a central control system, a monitoring system, a communication network interface and a human-machine interaction interface. The central control system is used for performing centralized control over the integrated photovoltaic charging, storage and swapping station, and a management personnel allocates and schedules the electric energy among the photovoltaic system, the power grid and the energy storage battery through the central control system; the monitoring system is used for monitoring the operation states of the photovoltaic system, the power distribution system, the charging and discharging system, the energy storage battery and the battery swap system, the management personnel can implement monitoring by installing a monitoring device such as a camera, a sensor, and an alarm device in the station, and the management personnel can be timely informed for maintenance in case of any abnormality of the device in the station; the communication network interface is used for connecting communications between the photovoltaic system, the power distribution system, the charging and discharging system, the energy storage battery and the battery swap system; and the human-machine interaction interface is used for information interaction between a user and the control system, and by means of the human-machine interaction interface, various systems in the integrated photovoltaic charging, storage and swapping station can be manipulated and managed uniformly.

Furthermore, in order to make the whole integrated photovoltaic charging, storage and swapping station more intensive, in the invention, the power distribution system, the charging and discharging system, the energy storage battery, the battery rack for placing the energy storage battery, and the control system are intensively placed within a charging container, which also makes it more convenient for the management personnel to manage. In addition, air conditioning and heating and ventilation are also provided within the charging container, so as to adjust the temperature of each device in the container at any time.

In order to respond to an economic regulation measure of a peak-valley price difference for a power grid, and rationally utilize photovoltaic power generation and peak-load shifting of an energy storage battery, the invention further provides a power distribution method executed by using the integrated photovoltaic charging, storage and swapping station, specifically as follows: when the photovoltaic system is ready to work: if the electricity price of the power grid is low, the first electric energy transmitted from the photovoltaic system is used to charge the energy storage battery through the DC-DC module or to directly charge the electric vehicle by means of the rapid charging plug; and if the electricity price of the power grid is high, the first electric energy transmitted from the photovoltaic system is transmitted to the power grid or the slow charging plug via the power distribution system. When the photovoltaic system is not suitable for working: if the electricity price of the power grid is low and/or the demand for battery swapping is great, the power distribution system transmits the second electric energy transmitted from the power grid to the slow charging plug or the second electric energy is transmitted to the energy storage battery via the charging and discharging system; and if the electricity price of the power grid is high and/or the demand for battery swapping is small, the power distribution system receives the third electric energy transmitted, via the two-way charging and discharging machine, from the energy storage battery and transmits the third electric energy to the power grid.

In summary, the integrated photovoltaic charging, storage and swapping station of the invention rationally integrates a photovoltaic power generation system, a power distribution system, a charging and discharging system, an energy storage battery and a battery swap system together, thereby achieving rational allocation and the flexible switching of the electric energy among the photovoltaic system, the power grid, the energy storage battery and the electric vehicle, being able to respond to an economic regulation measure of a peak-valley price difference for a power grid, and utilizing photovoltaic power generation and an energy storage battery to realize peak-load shifting.

Heretofore, the technical solutions of the invention have been described with reference to the preferred embodiments shown in the accompanying drawings. However, those skilled in the art can readily understand that the scope of protection of the invention is obviously not limited to these specific embodiments. Without departing from the principle of the invention, those skilled in the art may make equivalent changes or substitutions to related technical features, and the technical solutions after these changes or substitutions shall fall within the scope of protection of the invention.

## Claims

1. An integrated photovoltaic charging, storage and swapping station, comprising a photovoltaic system, a power distribution system, a charging and discharging system, an energy storage battery and a control system,
wherein the photovoltaic system is used for converting solar energy into first electric energy, and transmitting the first electric energy to the energy storage battery or a rapid charging plug via the charging and discharging system or transmitting the first electric energy to a power grid or a slow charging plug via the power distribution system;
the power distribution system is used for receiving second electric energy from the power grid and transmitting the second electric energy to the slow charging plug or the second electric energy is transmitted to the energy storage battery via the charging and discharging system;
the charging and discharging system is used for receiving the first electric energy transmitted from the photovoltaic system and the second electric energy transmitted from the power distribution system, and transmitting the first electric energy and the second electric energy to the energy storage battery and the rapid charging plug;
the energy storage battery is used for receiving and storing the first electric energy and the second electric energy transmitted from the charging and discharging system; and
the control system is used for controlling the operation states of the photovoltaic system, the power distribution system, the charging and discharging system and the energy storage battery.

2. The integrated photovoltaic charging, storage and swapping station according to claim 1, wherein the photovoltaic system comprises a photovoltaic panel assembly for converting solar energy into the first electric energy and an inverter by which the first electric energy is converted into an alternating current and then flows to the power distribution system, the power distribution system receiving and transmitting the first electric energy to the power grid.

3. The integrated photovoltaic charging, storage and swapping station according to claim 2, wherein the charging and discharging system comprises a DC-DC module and a two-way charging and discharging machine, and the first electric energy transmitted from the photovoltaic system is used to charge the energy storage battery through the DC-DC module or to directly charge an electric vehicle by means of the rapid charging plug; and the two-way charging and discharging machine is used for transmitting the second electric energy transmitted from the power distribution system to the energy storage battery or transmitting third electric energy from the energy storage battery to the power distribution system.

4. The integrated photovoltaic charging, storage and swapping station according to any one of claims 1 to 3, wherein the integrated photovoltaic charging, storage and swapping station further comprises a battery swap system for replacing a battery of the electric vehicle.

5. The integrated photovoltaic charging, storage and swapping station according to claim 4, wherein the battery swap system comprises a battery rack, a battery swap platform and a battery swap robot,
the battery rack is used for placing the energy storage battery;
the battery swap platform is used for parking the electric vehicle; and
the battery swap robot is used for replacing the battery of the electric vehicle and is able to transport a battery between the battery swap platform and the battery rack.

6. The integrated photovoltaic charging, storage and swapping station according to claim 5, wherein the control system comprises a central control system, a monitoring system, a communication network interface and a human-machine interaction interface,
the central control system is used for performing centralized control over the integrated photovoltaic charging, storage and swapping station;
the monitoring system is used for monitoring the operation states of the photovoltaic system, the power distribution system, the charging and discharging system, the energy storage battery and the battery swap system;
the communication network interface is used for connecting communications among the photovoltaic system, the power distribution system, the charging and discharging system, the energy storage battery and the battery swap system; and
the human-machine interaction interface is used for information interaction between a user and the control system.

7. The integrated photovoltaic charging, storage and swapping station according to claim 6, wherein the charging and discharging system further comprises a charging and discharging rack and an electrical control system located within the charging and discharging rack.

8. The integrated photovoltaic charging, storage and swapping station according to claim 7, wherein the integrated photovoltaic charging, storage and swapping station further comprises a charging container for housing the power distribution system, the charging and discharging system, the energy storage battery, the battery rack for placing the energy storage battery, and the control system.

9. A power distribution method for the integrated photovoltaic charging, storage and swapping station according to any one of claims 1 to 8, wherein when the photovoltaic system is ready to work:
if the electricity price of the power grid is low, the first electric energy transmitted from the photovoltaic system is used to charge the energy storage battery through the DC-DC module or to directly charge the electric vehicle by means of the rapid charging plug; and
if the electricity price of the power grid is high, the first electric energy transmitted from the photovoltaic system is transmitted to the power grid or the slow charging plug via the power distribution system.

10. The power distribution method according to claim 9, wherein when the photovoltaic system is not suitable for working:
if the electricity price of the power grid is low and/or the demand for battery swapping is great, the second electric energy transmitted from the power grid is transmitted by the power distribution system to the slow charging plug or is transmitted to the energy storage battery via the charging and discharging system; and
if the electricity price of the power grid is high and/or the demand for battery swapping is small, the power distribution system receives the third electric energy transmitted, via the two-way charging and discharging machine, from the energy storage battery and then transmits the third electric energy to the power grid.
